# EUROPEAN PATENT SPECIFICATION

(11) **EP 1 385 708 B1**
(45) Date of publication and mention of the grant of the patent: **13.10.2004**
(21) Application number: 02727547.8
(22) Date of filing: 09.04.2002
(51) Int. Cl.: B60C 1/00, C08L 9/00, C08L 23/08

(54) **TYRE WITH HIGH ROADHOLDING, TREAD BAND AND ELASTOMERIC COMPOSITION USED THEREIN**
REIFEN MIT HOHER STRASSENHAFTUNG, LAUFFLÄCHE UND DARIN BENUTZTE ELASTOMERMISCHUNG
PNEU A TENUE DE ROUTE ELEVEE, BANDE DE CONTACT ET COMPOSITION ELASTOMERE UTILISEE

(30) Priority: 13.04.2001 EP 01109205; 23.04.2001 US 285270 P; 30.05.2001 EP 01113226; 05.06.2001 US 295590 P
(43) Date of publication of application: 04.02.2004
(73) Proprietor: PIRELLI PNEUMATICI Società per Azioni, 20126 Milano (IT)
(72) Inventor: GALIMBERTI, Maurizio, I-20133 Milano (IT); FINO, Luigi, I-20030 Bovisio Masciago (IT); CAPRIO, Michela, I-83100 Avellino (IT)
(74) Representative: Giannesi, Pier Giovanni
(86) International application number: PCT/EP2002/003941
(87) International publication number: WO 2002/083432

(56) References cited:
- EP-A- 0 117 834
- EP-A- 0 889 091
- EP-A- 1 077 223
- WO-A-00/69930
- GB-A- 1 076 873
- CHEMICAL ABSTRACTS, vol. 132, no. 22, 29 May 2000 (2000-05-29) Columbus, Ohio, US; abstract no. 294994, HONDA ET AL.: "Olefin-aromatic vinyl compound copolymer-containing rubber compositions and their tough moldings" XP002182230 & JP 2000 119457 A (DENKI KAGAKU KK) 25 April 2000 (2000-04-25)

## Description

The present invention relates to a tyre for vehicle wheels, to a tread band and to a crosslinkable elastomeric composition.

More particularly, the present invention relates to a tyre for vehicle wheels, comprising at least one element made of crosslinked elastomeric material including at least one copolymer of ethylene with at least one aromatic α-olefin.

The present invention also relates to a tread band including a crosslinkable elastomeric composition comprising at least one copolymer of ethylene with at least one aromatic α-olefin, and also to an elastomeric composition comprising at least one copolymer of ethylene with at least one aromatic α-olefin.

As is known, in the field of producing tyres for vehicles, in particular very-high-performance tyres, one of the problems that is the most difficult to solve is always that of obtaining both a low rolling resistance at the normal working temperatures of the tyre (40°C-70°C) and good roadholding when the tyre exceeds said temperatures following high thermomechanical stresses such as, for example, those derived from driving the vehicle under "hard handling" conditions.

Attempts have been made in the prior art to improve the performance of tyres over a wider range of temperatures than the normal working temperatures.

European patent application EP 117 834 describes a tyre with a tread band consisting of a sulphur-crosslinked elastomeric composition which includes a dispersion comprising from about 2 phr to about 15 phr, preferably from about 3 phr to about 10 phr, of a polystyrene resin in the form of particles with a softening point of between about 90°C and about 120°C, preferably between about 90°C and about 110°C. The presence of said polystyrene resin in the tread band of the tyre is said to increase the holding on wet surfaces while keeping the rolling resistance unchanged under the normal conditions of use, and to ensure holding under conditions of particularly high friction. In this respect, the following explanation is given. When the temperature of the tread band reaches 120°C-150°C or higher values, due to particularly high friction conditions, and thus temperature values above the softening point of the polystyrene resin, the outer part of the tread band softens and this is believed to allow an increase in traction and better roadholding of the tyre. On the other hand, during normal use of the tyre, up to temperatures of about 70°C, and thus temperature values below the softening point of the polystyrene resin, said resin remains passive and the tyre maintains low rolling resistance values.

Patent application EP 1 029 874 describes a polymer resin derived from the polymerization of limonene, dicyclopentadiene and t-butylstyrene, for use in elastomeric compositions for manufacturing tyre tread bands. The presence of said polymer resin in the tyre tread band is said to make it possible to obtain an increase in holding on dry surfaces without having an adverse effect on the durability of the tyre.

Patent application EP 1 063 246 describes a polymer resin derived from the polymerization of limonene, dimethyldicyclopentadiene, indene and vinyltoluene, for use in elastomeric compositions for manufacturing tyre tread bands. The presence of said polymer resin in the tyre tread band is said to make it possible to obtain an increase in the holding on dry surfaces without having an adverse effect on the durability of the tyre.

Patent application EP 1 050 547 describes a polymer resin derived from the polymerization of limonene and dimethyldicyclopentadiene for use in elastomeric compositions for manufacturing tyre tread bands. The presence of said polymer resin in the tyre tread band is said to make it possible to obtain an increase in the holding on dry surfaces without having an adverse effect on the durability of the tyre.

Patent application EP 754 070 describes a crosslinkable elastomeric composition comprising a polymer base containing a crosslinkable unsaturated chain and at least one organic compound which is solid at ambient temperature, said compound being substantially insoluble in the polymer base and having a first-order or second-order transition temperature of between 80°C and 160°C and an average molecular weight of between 10 000 and 1 000 000. Said organic compound is chosen from polyphenylenether (such as, for example, Vestoran™ 1100 from Hüls), polyethylene, polypropylene, polymethyl methacrylate, polyvinyl alcohol, ethylene/vinyl alcohol copolymers, acrylonitrile/butadiene/styrene (ABS) terpolymers, ethylene/methacrylic acid copolymers, styrene/isoprene (SIS), styrene/butadiene (SBS), styrene/ethylenebutylene/styrene (S-E/B-S) and styrene/ethylenepropylene (S/E-P) block copolymers, or mixtures thereof. The abovementioned elastomeric composition may be used to prepare tread bands and is said to make it possible to obtain tyres with both low rolling resistance at the normal temperatures of use (40°C-70°C) and high roadholding when the tyre exceeds said temperatures due to high thermomechanical stresses.

Patent US 5 744 566 describes an unsaturated random copolymer consisting of the following comonomers:
(a1) an α-olefin containing from 2 to 20 carbon atoms;
(a2) a vinyl monomer containing an aromatic ring;
(a3) a non-conjugated triene or tetraene containing a vinyl group in the molecule.

Said copolymer may be used in elastomeric compositions, which are said to have good dynamic fatigue strength (resistance to bending), resistance to atmospheric agents, to heat, to ozone and to low temperatures. In addition, said copolymer, by virtue of the presence of side chains containing unsaturations, is said to show good performance in terms of chemical reactivity, processability, compatibility and capacity of co-crosslinking with diene elastomers such as, for example, natural rubber, butadiene rubber, isoprene rubber, styrene/butadiene (SBR) copolymers, nitrile rubbers, chloroprene. Elastomeric compositions comprising said copolymer are said to be particularly suitable, inter alia, for preparing the side walls of tyres.

European patent application EP 889 091 describes an elastomeric composition for use in preparing side walls or tread bands of tyres, which includes an unsaturated olefinic copolymer obtained from the polymerization of (i) ethylene, (ii) a vinylaromatic compound, (iii) a non-conjugated polyene and, optionally, (iv) an α-olefin containing at least 3 carbon atoms. The presence of said olefinic copolymer in an elastomeric composition for the side walls of tyres is said to make it possible to improve the tensile properties, resistance to cornering fatique and to reduce fuel consumption. The presence of said olefinic copolymer in an elastomeric composition for tyre tread bands is said to improve the tensile properties, the abrasion resistance and the roadholding on wet surfaces and to obtain low rolling resistance.

The prior art mentioned above shows that the presence of double bonds in olefinic copolymers, i.e. the use of unsaturated olefinic copolymers, is essential in order to obtain crosslinkable elastomeric compositions which may advantageously be used in the production of crosslinked manufactured products and, in particular, in the production of tyres.

The Applicant believes that the difficulty in simultaneously obtaining the abovementioned characteristics, i.e. of obtaining both low rolling resistance at the temperatures of normal use, and satisfactory roadholding when the tyre exceeds said temperatures, is derived mainly from the fact that these characteristics are influenced in exactly the opposite direction by the hysteresis characteristics of the elastomeric composition which constitutes the tread band of the tyre, i.e. by the amount of energy dissipated by the elastomeric material when subjected to dynamic stress.

In fact, in order to obtain the desired low rolling resistance of the tyre, it is necessary to use elastomeric compositions with a low hysteresis value, and thus compositions which are capable of dissipating a limited amount of energy during rolling. Conversely, in order to obtain the desired high roadholding of the tyre, it is necessary to use elastomeric compositions with a high hysteresis value, and thus compositions capable of dissipating a large amount of energy so as to ensure better adhesion between the tread band and the ground.

The solution to the abovementioned problem is thus all the more difficult given that the elastomeric composition which constitutes the tread band of the tyre needs to have exactly opposite and mutually incompatible hysteresis behaviours depending on the temperature range in which the tyre is working.

The Applicant has now found that it is possible to obtain crosslinkable elastomeric compositions capable of being used advantageously in the production of crosslinked manufactured products, in particular in the production of tyres, by using a copolymer of ethylene with at least one aromatic α-olefin, said copolymer being essentially free of side chains containing ethylenic double bonds. In this way, it is possible to obtain a crosslinkable elastomeric composition with differentiated hysteresis behaviour depending on the working temperature of the tyre, so as to obtain:
- satisfactory roadholding on wet surfaces (0°C-10°C);
- low rolling resistance at the normal working temperatures of the tyre (40°C-70°C);
- satisfactory roadholding when the tyre exceeds said temperatures due to high thermomechanical stresses.

In addition, the crosslinked elastomeric manufactured product obtained maintains good mechanical properties, both tensile and dynamic, without compromising the abrasion resistance.

According to a first aspect, the present invention thus relates to a tyre for vehicle wheels, comprising at least one element made of crosslinked elastomeric material, in which said element includes an elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

According to one preferred embodiment, the present invention relates to a tyre for vehicle wheels, comprising:
- a carcass structure having at least one carcass ply shaped in a substantially toroidal configuration, the opposite side edges of which are associated with respective left and right bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said element which includes an elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds;
is the tread band.

According to a further aspect, the present invention relates to a tread band for the tyres of vehicle wheels, including a crosslinkable elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

According to a further aspect, the present invention relates to an elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

According to a further aspect, the present invention relates to a crosslinked elastomeric manufactured product obtained by crosslinking an elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

According to one preferred embodiment, said copolymer of ethylene with at least one aromatic α-olefin (b) is present in the elastomeric composition in an amount of between 0.1 phr and 100 phr, preferably between 3 phr and 50 phr, even more preferably between 5 phr and 20 phr.

For the purpose of the present description and the claims, the term "phr" is intended to indicate the parts by weight of a given component of the elastomeric composition per 100 parts by weight of elastomeric base, which includes at least one elastomeric homopolymer or copolymer of 1,3-butadiene (a) optionally blended with at least one other elastomeric polymer (c) as defined below.

According to a further preferred embodiment, said elastomeric composition may also comprise at least one elastomeric polymer (c) other than 1,3-butadiene homopolymers or copolymers.

According to one preferred embodiment, the elastomeric homopolymer or copolymer of 1,3-butadiene (a) which may be used in the present invention may be chosen from those commonly used in sulphur-crosslinkable elastomeric compositions which are particularly suitable for producing tyres, i.e. from elastomeric homopolymers or copolymers of 1,3-butadiene with a glass transition temperature (Tg) which is generally below 20°C, preferably comprised between 0°C and -90°C. These homopolymers or copolymers may be obtained by solution, emulsion or gas-phase polymerization of 1,3-butadiene optionally blended with at least one comonomer chosen from conjugated diolefins other than 1,3-butadiene, monovinylarenes and/or polar comonomers.

The conjugated diolefins other than 1,3-butadiene generally contain from 5 to 12, preferably from 5 to 8 carbon atoms, and may be chosen, for example, from the group comprising: isoprene, 2,3-dimethyl-1,3-butadiene, 1,3-pentadiene, 1,3-hexadiene, 3-butyl-2,3-octadiene, 2-phenyl-1,3-butadiene, or mixtures thereof. Isoprene is particularly preferred.

Monovinylarenes which may optionally be used as comonomers generally contain from 8 to 20, preferably from 8 to 12 carbon atoms, and may be chosen, for example, from: styrene, 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(9-phenylbutyl)styrene, or mixtures thereof. Styrene is particularly preferred.

Polar comonomers which may optionally be used may be chosen, for example, from: vinylpyridine, vinylquinoline, acrylic and alkylacrylic acid esters, nitriles, or mixtures thereof, such as, for example, methyl acrylate, ethyl acrylate, methyl methacrylate, ethyl methacrylate, acrylonitrile, or mixtures thereof.

According to one preferred embodiment, the 1,3-butadiene homopolymer or copolymer (a) generally has the following composition: 25%-100% by weight, preferably 35%-95% by weight, of 1,3-butadiene; 0%-75% by weight, preferably 5%-65% by weight, of a monovinylarene, preferably styrene.

According to a further preferred embodiment, said 1,3-butadiene homopolymer or copolymer (a) may also comprise from 0% to 60% by weight, preferably from 25% to 50% by weight, of a conjugated diolefin other than 1,3-butadiene and/or from 0% to 60% by weight, preferably from 15% to 50% by weight, of a polar comonomer.

Preferably, the 1,3-butadiene homopolymer or copolymer (a) which may be used in the present invention may be chosen, for example, from: poly(1,3-butadiene) (in particular poly(1,3-butadiene) with a high 1,4-cis content), 1,3-butadiene/acrylonitrile copolymers, styrene/1,3-butadiene copolymers, styrene/isoprene/1,3-butadiene copolymers, styrene/1,3-butadiene/acrylo-nitrile copolymers, or mixtures thereof.

A 1,3-butadiene homopolymer or copolymer (a) which may also be used is one which has been functionalized by reaction with suitable terminating agents or coupling agents. In particular, the 1,3-butadiene homopolymers or copolymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European patent EP 451 604 or patents US 4 742 124 and US 4 550 142).

With reference to the copolymer of ethylene with at least one aromatic α-olefin (b), the term "aromatic α-olefin" generally means an olefin of formula (I):

CH₂=CH-(R₁R₂C)ₓ-C₆H_{5-y}(R₃)_{y} (I)

in which R₁, R₂ and R₃, which may be identical to or different from each other, represent hydrogen or a linear or branched alkyl group containing from 1 to 8 carbon atoms; or R₃, different from R₁ and R₂, represents an alkoxy group, a carboxyl group, an acyloxy group, said acyloxy group optionally being substituted with alkyl groups containing from 1 to 8 carbon atoms or hydroxyl groups or halogen atoms; x is 0 or an integer between 1 and 5 inclusive; y is 0, 1 or 2.

Specific examples of olefins of formula (I) are styrene; mono- or polyalkylstyrenes such as, for example, 4-methylstyrene, dimethylstyrene, ethylstyrene, vinyltoluene; styrene derivatives containing functional groups such as, for example, methoxystyrene, ethoxystyrene, vinylbenzoic acid, methyl vinylbenzoate, vinylbenzyl acetate, hydroxystyrene, chlorostyrene, divinylbenzene; phenyl-substituted alkenes such as, for example, allylbenzene, 4-phenylbutene-1, 3-phenylbutene-1, 4-(4-methylphenyl)butene-1, 4-(3-methylphenyl)butene-1, 4-(2-methylphenyl)butene-1, 4-(4-ethylphenyl)butene-1, 4-(4-butylphenyl)butene-1, 5-phenylpentene-1, 4-phenylpentene-1, 3-phenylpentene-1, 5(4-methylphenyl)pentene-1, 4-(2-methylphenyl)pentene-1, 3-(4-methylphenyl)pentene-2, 6-phenylhexene-1, 5-phenylhexene-1, 4-phenylhexene-1, 3-phenylhexene-1, 6-(4-methylphenyl)hexene-1, 5-(2-methylphenyl)hexene-1, 4-(4-methylphenyl)hexene-1, 3-(2-methylphenyl)hexene-1, 7-phenylheptene-1, 6-phenylheptene-1, 5-phenylheptene-1, 4-phenylheptene-1, 8-phenyloctene-1, 7-phenyloctene-1, 6-phenyloctene-1, 5-phenyloctene-1, 4-phenyloctene-1, 3-phenyloctene-1, 10-phenyldecene-1; or mixtures thereof. The aromatic α-olefin is preferably chosen from styrene, vinyltoluene, or mixtures thereof. Styrene is particularly preferred.

According to another preferred embodiment, said copolymer of ethylene with at least one aromatic α-olefin (b) is characterized by:
- a density of between 0.86 g/cm³ and 1.05 g/cm³, preferably between 0.92 g/cm³ and 1.0 g/cm³;
- a Melt Flow Index (MFI), measured according to ASTM standard D1238-00, of between 0.1 g/10 min and 35 g/10 min, preferably between 0.5 g/10 min and 20 g/10 min.

According to another preferred embodiment, said copolymer of ethylene with at least one aromatic α-olefin (b) has a glass transition temperature, measured by DSC (Differential Scanning Calorimetry), of at least -25°C and does not have a melting point.

According to another preferred embodiment, said copolymer of ethylene with at least one aromatic α-olefin (b) has a glass transition temperature of at least -25°C and a melting point of at least 25°C, both measured by DSC (Differential Scanning Calorimetry).

The copolymer of ethylene with at least one aromatic α-olefin (b) generally has the following composition: 50 mol%-97 mol%, preferably 60 mol%-93 mol%, of ethylene; 3 mol%-50 mol%, preferably 7 mol%-40 mol%, of an aromatic α-olefin.

According to a further preferred embodiment, the copolymer of ethylene with at least one aromatic α-olefin (b) has a molecular weight distribution (MWD) index of less than 5, preferably comprised between 1.5 and 3.5. Said molecular weight distribution index is defined as the ratio between the weight-average molecular weight (M_{w}) and the number-average molecular weight (Mₙ) and may be determined, according to conventional techniques, by gel permeation chromatography (GPC).

According to a further preferred embodiment, said copolymer of ethylene with at least one aromatic α-olefin (b) is characterized by a high regioregularity in the sequence of the monomer units. In particular, said copolymer has an amount of -CH₂- groups in -(CH₂)ₙ-sequences, where n is an even integer, generally of less than 5 mol%, preferably of less than 1 mol%, relative to the total amount of -CH₂- groups. The amount of -(CH₂)ₙ- sequences may be determined, according to conventional techniques, by ¹³C-NMR analysis.

According to a further preferred embodiment, said copolymer of ethylene with at least one aromatic α-olefin (b) is characterized by a composition distribution index of greater than 45%, said index being defined as the weight percentage of copolymer molecules with an α-olefin content within to 50% of the average total molar content of α-olefin.

The composition distribution index gives a measurement of the distribution of the aromatic α-olefin among the copolymer molecules, and may be determined by means of Temperature Rising Elution Fractionation techniques, as described, for example, in patent US 5 008 204, or by Wild et al. in J. Poly. Sci. Poly, Phys. ed., Vol. 20, p. 441 (1982).

The copolymer of ethylene with at least one aromatic α-olefin (b) may be obtained by copolymerization of ethylene with an aromatic α-olefin, in the presence of a "single-site" catalyst such as, for example, a metallocene catalyst or of a so-called "Constrained Geometry Catalyst".

Metallocene catalysts which may be used in the copolymerization of the olefins are, for example, coordination complexes between a transition metal, usually from Group IV, in particular titanium, zirconium or hafnium, and two cyclopentadienyl ligands, which are optionally substituted, used in combination with a co-catalyst, for example an aluminoxane, preferably methyl aluminoxane, or a boron compound (see, for example, Adv. Organomet. Chem, Vol. 18, p. 99, (1980); Adv. Organomet. Chem, Vol. 32, p. 325, (1991); J.M.S. - Rev. Macromol. Chem. Phys., Vol. C34(3), p. 439, (1994); J. Organometallic Chemistry, Vol. 479, pp. 1-29, (1994); Angew. Chem. Int., Ed. Engl., Vol. 34, p. 1143, (1995); Prog. Polym. Sci., Vol. 20, p. 459 (1995); Adv. Polym. Sci., Vol. 127, p. 144, (1997); patent US 5 229 478, or patent applications WO 93/19107, EP 35 342, EP 129 368, EP 277 003, EP 277 004, EP 632 065).

Catalysts so-called "Constrained Geometry Catalyst" which may be used in the polymerization of the olefins are, for example, coordination complexes between a metal, usually from Groups 3-10 or from the Lanthanide series, and a single cyclopentadienyl ligand, which is optionally substituted, used in combination with a co-catalyst, for example an aluminoxane, preferably methyl aluminoxane, or a boron compound (see, for example, Organometallics, Vol. 16, p. 3649, (1997); J. Am. Chem. Soc., Vol. 118, p. 13021, (1996); J. Am. Chem. Soc., Vol. 118, p. 12451, (1996); J. Organometallic Chemistry, Vol. 482, p. 169, (1994); J. Am. Chem. Soc., Vol. 116, p. 4623, (1994); Organometallics, Vol. 9, p. 867, (1990); patents US 5 096 867, US 5 414 040, or patent applications WO 92/00333, WO 97/15583, WO 01/12708, EP 416 815, EP 418 044, EP 420 436, EP 514 828.

The synthesis of copolymers of ethylene with at least one aromatic α-olefin (b) in the presence of metallocene catalysts is described, for example, in Macromol. Rapid. Commun., Vol. 17, pp. 745-748, (1996); or in Makromol. Chem., Vol. 191, pp. 2378-2396, (1990).

The synthesis of copolymers of ethylene with at least one aromatic α-olefin (b) in the presence of catalysts so called "Constrained Geometry Catalyst" is described, for example, in Macromol. Chem. Phys., Vol. 197, p. 1071-1083, (1996); Macromolecules, Vol. 32, pp. 7587-7593; or in the patent applications WO 01/112078; EP 514 828, EP 416 815.

The copolymer of ethylene with at least one aromatic α-olefin (b) may optionally contain functional groups chosen from: carboxylic groups, anhydride groups, ester groups, silane groups, epoxide groups. The amount of functional groups present in the polymer is generally comprised between 0.05 and 50 parts by weight, preferably between 0.1 and 10 parts by weight, relative to 100 parts by weight of copolymer of ethylene with at least one aromatic α-olefin (b).

The functional groups may be introduced during the production of the copolymer of ethylene with at least one aromatic α-olefin (b), by copolymerization with corresponding functionalized monomers containing at least one ethylenic unsaturation, or by subsequent modification of the copolymer of ethylene with at least one aromatic α-olefin (b) by grafting the abovementioned functianalized monomers in the presence of a radical initiator (in particular an organic peroxide).

Alternatively, the functional groups may be introduced by reacting pre-existing groups on the copolymer of ethylene with at least one aromatic α-olefin (b), with a suitable reagent, for example by an epoxidation reaction of a diene polymer containing double bonds along the main chain and/or as side groups, with a peracid (for example m-chloroperbenzoic acid or peracetic acid) or with hydrogen peroxide in the presence of a carboxylic acid or a derivative thereof.

Functionalized monomers which may be used, for example, are: silanes containing at least one ethylenic unsaturation; epoxides containing at least one ethylenic unsaturation; monocarboxylic acids or, preferably, dicarboxylic acids containing at least one ethylenic unsaturation, or derivatives thereof, in particular anhydrides or esters.

Examples of silanes containing at least one ethylenic unsaturation are: γ-methacryloxypropyltrimethoxysilane, allyltrimethoxysilane, allyltriethoxysilane, allylmethyldimethoxylsilane, allylmethyldiethoxysilane, vinyltris(2-methoxyethoxy)silane, vinyltrimethoxysilane, vinylmethyldimethoxysilane, vinyltriethoxysilane, or mixtures thereof.

Examples of epoxides containing at least one ethylenic unsaturation are: glycidyl acrylate, glycidyl methacrylate, monoglycidyl ester of itaconic acid, glycidyl ester of maleic acid, vinyl glycidyl ether, allyl glycidyl ether, or mixtures thereof.

Examples of monocarboxylic or dicarboxylic acids containing at least one ethylenic unsaturation, or derivatives thereof, are: maleic acid, maleic anhydride, fumaric acid, citraconic acid, itaconic acid, acrylic acid, methacrylic acid, or mixtures thereof, and anhydrides or esters derived therefrom, or mixtures thereof. Maleic anhydride is particularly preferred.

As mentioned above, the elastomeric composition may also comprise at least one elastomeric polymer (c) other than 1,3-butadiene copolymers or homopolymers.

According to one preferred embodiment, said elastomeric polymer (c) may be chosen from the diene elastomeric polymers commonly used in sulphur-crosslinkable elastomeric compositions which are particularly suitable for producing tyres, i.e. from elastomeric unsaturated-chain homopolymers or copolymers with a glass transition temperature (Tg) which is generally below 20°C, preferably comprised between 0°C and -90°C. These homopolymers or copolymers may be of natural origin or may be obtained by solution, emulsion or gas-phase polymerization of one or more conjugated diolefins, optionally blended with one or more monovinylarenes in amounts generally of not more than 50% by weight.

The conjugated diolefins generally contain from 5 to 12, preferably from 5 to 8 carbon atoms, and may be chosen, for example, from the group comprising: isoprene, 1,3-pentadiene, 1,3-hexadiene, 3-butyl-1,3-octadiene, or mixtures thereof. Isoprene is particularly preferred.

Monovinylarenes which may optionally be used a comonomers generally contain from 8 to 20, preferably from 8 to 12 carbon atoms, and may be chosen, for example, from: styrene, 1-vinylnaphthalene; 2-vinylnaphthalene; various alkyl, cycloalkyl, aryl, alkylaryl or arylalkyl derivatives of styrene, such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Preferably, the elastomeric polymer (c) other than 1,3-butadiene homopolymers or copolymers, which may be used in the present invention, may be chosen, for example, from: cis-1,4-polyisoprene (natural or synthetic, preferably natural rubber), 3,4-polyisoprene, styrene/isoprene copolymers, or mixtures thereof.

According to a further preferred embodiment, said elastomeric polymer (c) other than 1,3-butadiene copolymers or homopolymers may be chosen from elastomeric polymers of one or more monoolefins with an olefinic comonomer, or derivatives thereof. The monoolefins may be chosen from: ethylene and α-olefins generally containing from 3 to 12 carbon atoms, such as, for example, propylene, 1-butene, 1-pentene, 1-hexene, 1-octene, or mixtures thereof. The following are preferred: copolymers of ethylene and of an α-olefin, and optionally of a diene; isobutene homopolymers or copolymers thereof with small amounts of a diene, which may be at least partially halogenated. The diene optionally present generally contains from 4 to 20 carbon atoms and is preferably chosen from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the ones that are particularly preferred are: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

An elastomeric polymer (c) other than a 1,3-butadiene homopolymer or copolymer, functionalized by reaction with suitable terminating or coupling agents, may also be used. In particular, the elastomeric polymers obtained by anionic polymerization in the presence of an organometallic initiator (in particular an organolithium initiator) may be functionalized by reacting the residual organometallic groups derived from the initiator with suitable terminating or coupling agents such as, for example, imines, carbodiimides, alkyltin halides, substituted benzophenones, alkoxysilanes or aryloxysilanes (see, for example, European patent EP 451 604, or patents US 4 742 124 and US 4 550 142).

At least one reinforcing filler may advantageously be added to the elastomeric composition according to the present invention, in an amount generally of between 0.1 phr and 120 phr, preferably between 20 phr and 90 phr. The reinforcing filler may be chosen from those commonly used for crosslinked manufactured products, in particular for tyres, such as, for example, carbon black, silica, alumina, aluminosilicates, calcium carbonate, kaolin, or mixtures thereof.

The types of carbon black which may be used according to the present invention may be chosen from those used conventionally in the production of tyres, generally having a surface area of at least 20 m²/g (determined by CTAB absorption as described in ISO standard 6810).

The silica which may be used according to the present invention can generally be a pyrogenic silica or, preferably, a precipitated silica, with a BET surface area (measured according to ISO standard 5794/1) of between 50 m²/g and 500 m²/g, preferably between 70 m²/g and 200 m²/g.

When a reinforcing filler comprising silica is present, the elastomeric composition may advantageously incorporate a coupling agent capable of interacting with the silica and binding it to the elastomeric base during the vulcanization.

Coupling agents that are preferably used are silane-based agents which may be identified, for example, by the following structural formula (II):

(R)₃Si-CnH₂ₙ-X (II)

in which the groups R, which may be identical to or different from each other, are chosen from: alkyl, alkoxy or aryloxy groups or from halogen atoms, on condition that at least one of the groups R is an alkoxy or aryloxy group; n is an integer between 1 and 6 inclusive; X is a group chosen from: nitrous, mercapto, amino, epoxide, vinyl, imido, chloro, -(S)ₘCₙH₂ₙ-Si-(R)₃ in which m and n are integers between 1 and 6 inclusive and the groups R are defined as above.

Among these agents, the silane binder bis(3-triethoxysilylpropyl) tetrasulphide (Si69) is particularly preferred, as such or suitably mixed with a moderate amount of inert filler (for example carbon black) so as to facilitate its incorporation into the elastomeric composition.

The elastomeric composition according to the present invention may be vulcanized according to known techniques, in particular with sulphur-based vulcanizing systems commonly used for diene elastomers. To this end, in the composition, after a first stage of thermomechanical processing, a sulphur-based vulcanizing agent is incorporated together with vulcanization activators and accelerators. In this second processing stage, the temperature is generally kept below 120°C, preferably below 100°C, so as to prevent undesired pre-cross-linking phenomena.

The vulcanizing agent most advantageously used is sulphur, or sulfur-containing molecules (sulfur donors) with accelerators and activators known to anyone skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, preferably formed in situ in the elastomeric composition from ZnO and fatty acid, and also BiO, PbO, Pb₃O₄, PbO₂, or mixtures thereof.

Accelerators that are commonly used may be chosen from: dithiocarbamates, guanidine, thiourea, thiazoles, sulphenamides, thiurams, amines, xanthates, or mixtures thereof.

The elastomeric composition according to the present invention may comprise other commonly used additives chosen according to the specific application for which it is intended. For example, said composition may contain the following additives: antioxidants, anti-ageing agents, plasticizers, adhesives, anti-ozone agents, modifying resins, fibres (for example Kevlar® pulp), or mixtures thereof.

In particular, for the purpose of further improving the processability, a plasticizer may be added to the elastomeric composition according to the present invention, this plasticizer generally being chosen from mineral oils, vegetable oils, synthetic oils, or mixtures thereof such as, for example, aromatic oil, naphthenic oil, phthalates, soybean oil, or mixtures thereof. The amount of plasticizer may generally range between 2 phr and 100 phr, preferably between 5 phr and 50 phr.

The elastomeric composition according to the present invention may be prepared by mixing the polymeric components with the reinforcing filler optionally present and with the other additives according to techniques known in the art. The mixing may be carried out, for example, using an open-mill mixer or an internal mixer of the type with tangential rotors (Banbury) or interlocking rotors (Intermix), or in continuous mixers of the Ko-Kneader (Buss) type or corotating or counter-rotating twin-screw type.

The copolymer of ethylene with at least one aromatic α-olefin (b) may be used in the form of powder, granules or pellets.

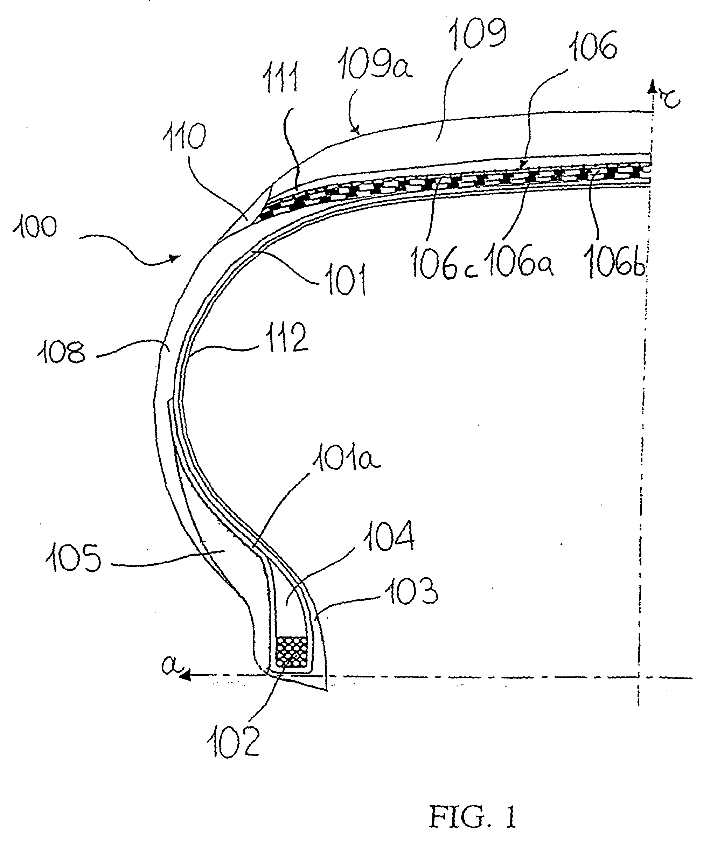

The present invention will now be illustrated in further detail by means of a number of preparation examples, with reference to the attached Fig. 1, which is a view in cross section of a portion of a tyre made according to the invention.

"a" indicates an axial direction and "r" indicates a radial direction. For simplicity, Fig. 1 shows only a portion of the tyre, the remaining portion not represented being identical and symmetrically arranged with respect to the radial direction "r".

The tyre (100) comprises at least one carcass ply (101), the opposite side edges of which are associated with respective bead wires (102). The association between the carcass ply (101) and the bead wires (102) is achieved in this case by folding back the opposite side edges of the carcass ply (101) around the bead wires (102) so as to form the so called carcass back-folds (101a) as shown in Fig. 1.

Alternatively, the conventional bead wires (102) can be replaced with a pair of circumferentially inextensible annular inserts formed from elongate elements arranged in concentric coils (not represented in Fig. 1) (see, for example, European patent applications EP 928 680 and EP 928 702). In this case, the carcass ply (101) is not back-folded around said annular inserts, the coupling being provided by a second carcass ply (not represented in Fig. 1) applied externally over the first.

The carcass ply (101) generally consists of a plurality of reinforcing cords arranged parallel to each other and at least partially coated with a layer of elastomeric compound. These reinforcing cords usually consist of textile fibres such as, for example, rayon, nylon or polyethyleneterephthalate, or of steel wires stranded together, coated with a metal alloy (for example copper/zinc, zinc/manganese, zinc/molybdenum/cobalt alloys and the like).

The rubberized carcass ply (101) is usually of radial type, i.e. it incorporates reinforcing cords arranged in a substantially perpendicular direction relative to a circumferential direction. Each bead wire (102) is encased in a bead (103), defined along an inner circumferential edge of the tyre (100), with which the tyre engages on a rim (not represented in Fig. 1) forming part of a vehicle wheel. The space defined by each carcass back-fold (101a) contains a bead filler (104) in which the bead wires (102) are embedded. An antiabrasive strip (105) is usually placed in an axially external position relative to the carcass back-fold (101a).

A belt structure (106) is applied along the circumference of the rubberized carcass ply (101). In the particular embodiment in Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b) may optionally be applied at least one zero-degree reinforcing layer (106c), commonly known as a "0° belt", which generally incorporates a plurality of reinforcing cords, typically textile cords, arranged at an angle of a few degrees relative to a circumferential direction, and coated and welded together by means of an elastomeric material.

A side wall (108) is also applied externally onto the rubberized carcass ply (101), this side wall extending, in an axially external position, from the bead (103) to the end of the belt structure (106).

A tread band (109), whose side edges are connected to the side walls (108), is applied circumferentially in a position radially external to the belt structure (106). Externally, the tread band (109), made in accordance with the present invention, has a rolling surface (109a) designed to come into contact with the ground. Circumferential grooves which are connected by transverse notches (not represented in Fig. 1) so as to define a plurality of blocks of various shapes and sizes distributed over the rolling surface (109a) are generally made in this surface (109a), which is represented for simplicity in Fig. 1 as being smooth.

A strip made of elastomeric material (110), commonly known as a "mini-side wall", may optionally be present in the connecting zone between the side walls (108) and the tread band (109), this mini-side wall generally being obtained by co-extrusion with the tread band and allowing an improvement in the mechanical interaction between the tread band (109) and the side walls (108). Alternatively, the end portion of the side wall (108) directly covers the side edge of the tread band (109). A underlayer which forms, with the tread band (109), a structure commonly known as a "cap and base" (not represented in Fig. 1) may optionally be placed between the belt structure (106) and the tread band (109).

A layer of elastomeric material (111) which serves as an "attachment sheet", i.e. a sheet capable of providing the connection between the tread band (109) and the belt structure (106), may be placed between the tread band (109) and the belt structure (106).

In the case of tubeless tyres, a rubber layer (112) generally known as a "liner", which provides the necessary impermeability to the inflation air of the tyre, may also be provided in a radially internal position relative to the rubberized carcass ply (101).

The process for producing the tyre according to the present invention may be carried out according to techniques and using apparatus that are known in the art, as described, for example, in patents EP 199 064, US 4 872 822, US 4 768 937, said process including at least one stage of manufacturing the green tyre and at least one stage of vulcanizing this tyre.

More particularly, the process for producing the tyre comprises the stages of first preparing beforehand and separately from each other a series of semi-finished articles corresponding to the various parts of the tyre (carcass plies, belt structure, bead wires, fillers, side walls and tread band) which are then combined together using a suitable manufacturing machine. Next, the subsequent vulcanization stage welds the abovementioned semi-finished articles together to give a monolithic block, i.e. the finished tyre.

Naturally, the stage of preparing the abovementioned semi-finished articles is preceded by a stage of preparing and moulding the various compounds which are the constituents of said semi-finished articles, according to conventional techniques.

The green tyre thus obtained is then passed to the subsequent stages of moulding and vulcanization. To this end, a vulcanization mould is used which is designed to receive the tyre being processed inside a moulding cavity having walls which are countermoulded to define the outer surface of the tyre when the vulcanization is complete.

Alternative processes for producing a tyre or parts of a tyre without using semi-finished articles are disclosed, for example, in the abovementioned patent applications EP 928 680 and EP 928 702.

The green tyre can be moulded by introducing a pressurized fluid into the space defined by the inner surface of the tyre, so as to press the outer surface of the green tyre against the walls of the moulding cavity. In one of the moulding methods most widely practised, a vulcanization chamber made of elastomeric material, filled with steam and/or another fluid under pressure, is inflated inside the tyre closed inside the moulding cavity. In this way, the green tyre is pushed against the inner walls of the moulding cavity, thus obtaining the desired moulding. Alternatively, the moulding can be carried out without an inflatable vulcanization chamber, by providing inside the tyre a toroidal metal support shaped according to the configuration of the inner surface of the tyre to be obtained as described, for example, in patent EP 242 840. The difference in coefficient of thermal expansion between the toroidal metal support and the crude elastomeric material is exploited to achieve an adequate moulding pressure.

At this point, the stage of vulcanizing the crude elastomeric material present in the tyre is carried out. To this end, the outer wall of the vulcanization mould is placed in contact with a heating fluid (generally steam) such that the outer wall reaches a maximum temperature generally of between 100°C and 230°C. Simultaneously, the inner surface of the tyre is heated to the vulcanization temperature using the same pressurized fluid used to press the tyre against the walls of the moulding cavity, heated to a maximum temperature of between 100°C and 250°C. The time required to obtain a satisfactory degree of vulcanization throughout the mass of the elastomeric material may vary in general between 3 min and 90 min and depends mainly on the dimensions of the tyre. When the vulcanization is complete, the tyre is removed from the vulcanization mould.

Although the present invention has been illustrated specifically in relation to a tyre, other crosslinked elastomeric manufactured products that may be produced in accordance with the invention may be, for example, conveyor belts, driving belts, flexible tubes.

The present invention will be further illustrated below by means of a number of preparation examples, which are given for purely indicative purposes and without any limitation of this invention.

### EXAMPLE 1

### Preparation of the ethylene/styrene copolymer

320 ml of toluene, 110 ml of styrene and 10 ml of a toluene solution at 10% wt/vol. of methylaluminoxane were introduced into a 1 1 glass autoclave (Buchi) fitted with a mechanical stirrer, a jacket for thermostatic regulation and valves for the connection with vacuum and nitrogen lines for the introducion of the solvent and the reagent solutions, working under a nitrogen atmosphere and at room temperature. The reactor was then maintained thermostatically at 50°C and saturated with ethylene at 1 atm. 20 ml of a toluene solution containing 2.7×10⁻⁵ mol of η1,η5-(t-butylamidodimethylsilyl)(2,3,4,5-tetramethyl-1-cyclopentadienyl)titanium dichloride and 2.7×10⁻³ mol of methylaluminoxane were then injected. The polymerization was carried out while maintaining the temperature at 50°C and raising the ethylene pressure to 3 atm. After 150 min under these conditions, the polymerization was stopped by injecting methanol. The copolymer obtained was precipitated from ethanol, acidified with hydrochloric acid, washed, filtered off and dried under vacuum to constant weight. The yield was 70 g. The polymerization conditions adopted and the properties of the ethylene/styrene copolymer obtained are given in Table 1.

The styrene content was determined by ¹³C-NMR analysis, working as described by L. Oliva et al. in Macromolecules, Vol. 30, pp. 5616-5619, (1997). The glass transition temperature (T_{g}) was determined by differential scanning calorimetry using a Mettler Toledo DSC 820 differential scanning calorimeter. The temperature program below was applied to the sample to be analysed:
- heating from -100°C to 150°C at a rate of 10°C/min.;
- isotherm for 5 minutes at 150°C;
- cooling to -100°C at a rate of 2°C/min.;
- isotherm for 10 minutes at -100°C;
- heating to 150°C at a rate of 10°C/min.

**TABLE 1**

| COPOLYMER | |
|---|---|
| POLYMERIZATION CONDITIONS | |
| Toluene | 350 |
| η1,η5-(t-butylamidodimethylsilyl)(2,3,4,5-tetramethyl-1-cyclopentadienyl)titanium dichloride (×10⁻⁵ mol) | 2.7 |
| Ethylene (atm) | 3 |
| Styrene charged (ml) | 110 |
| Reaction time (min) | 150 |
| Reaction temperature (°C) | 50 |
| Yield (g) | 70 |
| PROPERTIES OF THE COPOLYMER | |
| Styrene content (mol%) | 25 |
| T_{g} (°C) | -9 |

### EXAMPLES 2-5

### Preparation of the elastomeric compositions

The elastomeric compositions given in Table 2 (the amounts of the various components are expressed in phr) were prepared as follows.

All the ingredients except the sulphur and the accelerator were mixed in an internal mixer (Pomini PL 1.6 model) for about 5 min (1st stage). As soon as the temperature of 145±5°C was reached, the elastomeric composition was discharged. The sulphur and the accelerator were then added and mixing was carried out in an open-mill mixer (2nd stage).

**TABLE 2**

| EXAMPLE | 2 (*) | 3 (*) | 4 (*) | 5 |
|---|---|---|---|---|
| 1st Stage | | | | |
| SBR | 100 | 100 | 100 | 100 |
| Carbon black | 60 | 60 | 60 | 60 |
| Stearic acid | 1 | 1 | 1 | 1 |
| Zinc oxide | 2.5 | 2.5 | 2.5 | 2.5 |
| Aromatic oil | 10 | - | - | - |
| Cumarone resin | - | 10 | - | - |
| Methylstyrene resin | - | - | 10 | - |
| Ethylene/styrene copolymer | - | - | - | 10 |
| Antioxidant | 2 | 2 | 2 | 2 |

| 2nd stage | | | | |
|---|---|---|---|---|
| CBS | 2 | 2 | 2 | 2 |
| Sulphur | 1 | 1 | 1 | 1 |

| | | | | |
|---|---|---|---|---|
| (*): comparative | | | | |
| SBR: styrene/butadiene copolymer, obtained by solution polymerization, containing 40% by weight of styrene, extended with 37.5 phr of oil (Europrene® 1721 - EniChem Elastomeri); | | | | |
| Carbon black: N115 (Vulcan® 9 - Cabot); | | | | |
| Cumarone resin: product derived from the polymerization of unsaturated hydrocarbons derived exclusively from coal tar (Rhenosin® 100 - Rhein-Chemie); | | | | |
| Methylstyrene resin: thermoplastic hydrocarbon resin derived mainly from α-methylstyrene (Kristalex™ F85 - Hercules); | | | | |
| Antioxidant: phenyl-p-phenylenediamine; | | | | |
| CBS (accelerator): N-cyclohexyl-2-benzothiazylsulphenamide (Vulkacit® CZ - Bayer). | | | | |

The static mechanical properties were measured on samples of the abovementioned elastomeric compositions vulcanized at 151°C for 30 min, according to ISO standard 37, and the hardness in IRHD degrees was measured at 23°C and at 100°C (according to ISO standard 48). The results obtained are given in Table 3.

Table 3 also shows the dynamic mechanical properties, measured using an Instron dynamic device in the traction-compression mode according to the following methods. A test piece of the cross-linked material having a cylindrical form (length = 25 mm; diameter = 14 mm), compression-preloaded up to a 10% longitudinal deformation with respect to the initial length, and kept at the prefixed temperature (70°C or 10°C) for the whole duration of the test, was submitted to a dynamic sinusoidal strain having an amplitude of ±3.33% with respect to the length under pre-load, with a 10 Hz frequency. The dynamic mechanical properties are expressed in terms of dynamic elastic modulus (E') and tandelta (loss factor) values. As is known, the tandelta value is calculated as a ratio between the viscous modulus (E") and the elastic modulus (E'), both of them being determined with the above dynamic measurements.

Lastly the DIN abrasion values were measured according to ISO standard 4649, also reported in Table 3, expressed as relative volumetric loss with respect to the reference composition of Example 2 (set at 100).

**TABLE 3**

| EXAMPLE | 2 (*) | 3 (*) | 4 (*) | 5 |
|---|---|---|---|---|
| STATIC MECHANICAL PROPERTIES | | | | |
| 100% modulus (MPa) | 1.93 | 2.14 | 2.30 | 2.56 |
| 300% modulus (MPa) | 8.72 | 8.90 | 9.78 | 10.93 |
| Stress at break (MPa) | 16.37 | 17.52 | 17.35 | 17.47 |
| Elongation at break (%) | 537 | 563 | 518 | 491 |

| DYNAMIC MECHANICAL PROPERTIES | | | | |
|---|---|---|---|---|
| E' (23°C) (MPa) | 7.88 | 10.09 | 9.52 | 10.98 |
| E' (70°C) (MPa) | 4.39 | 4.72 | 4.84 | 5.41 |
| E' (100°C) (MPa) | 3.88 | 3.92 | 4.16 | 4.47 |
| E' (120°C) (MPa) | 3.83 | 3.81 | 4.13 | 4.33 |
| Tandelta (23°C) | 0.469 | 0.528 | 0.522 | 0.440 |
| Tandelta (70°C) | 0.291 | 0.344 | 0.316 | 0.312 |
| Tandelta (100°C) | 0.226 | 0.264 | 0.239 | 0.263 |
| Tandelta (120°C) | 0.199 | 0.231 | 0.210 | 0.240 |
| Tandelta (100°C)/Tandelta (70°C) | 0.777 | 0.767 | 0.756 | 0.843 |
| Tandelta (120°C)/Tandelta (70°C) | 0.684 | 0.672 | 0.665 | 0.769 |
| IRHD hardness at 23°C | 69 | 75 | 73 | 76 |
| IRHD hardness at 100°C | 55 | 55 | 58 | 62 |
| DIN abrasion (index) | 100 | 106 | 97 | 79 |

| | | | | |
|---|---|---|---|---|
| (*): comparative | | | | |

### EXAMPLES 6-9

### Preparation of the elastomeric compositions

The elastomeric compositions given in Table 4 (the amounts of the various components are expressed in phr) were prepared by the same methods as those described for Examples 2-5.

**TABLE 4**

| EXAMPLE | 6 (*) | 7 (*) | 8 (*) | 9 |
|---|---|---|---|---|
| 1st Stage | | | | |
| SBR | 90 | 90 | 90 | 90 |
| BR | 35 | 35 | 35 | 35 |
| Silica | 70 | 70 | 70 | 70 |
| Silane | 5.6 | 5.6 | 5.6 | 5.6 |
| Stearic acid | 2 | 2 | 2 | 2 |
| Zinc oxide | 2.5 | 2.5 | 2.5 | 2.5 |
| Aromatic oil | 8 | - | - | - |
| Cumarone resin | - | 8 | - | - |
| Methylstyrene resin | - | - | 8 | - |
| Ethylene/styrene copolymer | - | - | - | 8 |
| Antioxidant | 2 | 2 | 2 | 2 |
| Microcrystalline wax | 1 | 1 | 1 | 1 |

| 2nd stage | | | | |
|---|---|---|---|---|
| CBS | 2 | 2 | 2 | 2 |
| DPG | 1.9 | 1.9 | 1.9 | 1.9 |
| Sulphur | 1 | 1 | 1 | 1 |

| | | | | |
|---|---|---|---|---|
| (*): comparative | | | | |
| SBR: styrene/butadiene copolymer, obtained by solution polymerization, containing 25% by weight of styrene, extended with 37.5 phr of oil (Buna® VSL 5025 - Bayer); | | | | |
| BR: cis-1,4-polybutadiene (Europrene® Neocis BR40 EniChem Elastomeri); | | | | |
| Silica: precipitated silica (Zeosil® 1165 MP - Rhone-Poulenc); | | | | |
| Cumarone resin: product derived from the polymerization of unsaturated hydrocarbons derived exclusively from coal tar (Rhenosin® 100 - Rhein-Chemie); | | | | |
| Methylstyrene resin: thermoplastic hydrocarbon resin derived mainly from α-methylstyrene (Kristalex™ F85 - Hercules); | | | | |
| Silane: bis(3-triethoxysilylpropyl) tetrasulphide (product X50S containing 50% carbon black and 50% silane - Degussa); | | | | |
| Antioxidant: phenyl-p-phenylenediamine; | | | | |
| DPG: diphenylguanidine (Vulkacit® D - Bayer). | | | | |
| CBS (accelerator): N-cyclohexyl-2-benzothiazylsulphenamide (Vulkacit® CZ - Bayer) . | | | | |

The same measurements as in Examples 2-5 were carried out on the elastomeric compositions thus obtained. The results obtained are given in Table 5.

**TABLE 5**

| EXAMPLE | 6 (*) | 7 (*) | 8 (*) | 9 |
|---|---|---|---|---|
| STATIC MECHANICAL PROPERTIES | | | | |
| 100% modulus (MPa) | 1.95 | 1.92 | 2.07 | 2.26 |
| 300% modulus (MPa) | 8.22 | 8.67 | 9.35 | 9.95 |
| Stress at break (MPa) | 11.28 | 13.37 | 11.31 | 12.14 |
| Elongation at break (%) | 385 | 436 | 372 | 375 |

| DYNAMIC MECHANICAL PROPERTIES | | | | |
|---|---|---|---|---|
| E' (23°C) (MPa) | 6.55 | 6.94 | 6.63 | 7.75 |
| E' (70°C) (MPa) | 4.79 | 4.85 | 4.76 | 5.73 |
| E' (100°C) (MPa) | 4.55 | 4.57 | 4.54 | 5.01 |
| E' (120°C) (MPa) | 4.52 | 4.50 | 4.51 | 4.92 |
| Tandelta (23°C) | 0.212 | 0.248 | 0.230 | 0.226 |
| Tandelta (70°C) | 0.124 | 0.142 | 0.130 | 0.136 |
| Tandelta (100°C) | 0.103 | 0.117 | 0.102 | 0.120 |
| Tandelta (120°C) | 0.092 | 0.101 | 0.076 | 0.108 |
| Tandelta | 0.831 | 0.824 | 0.816 | 0.882 |
| (100°C)/Tandelta (70°C) | | | | |
| Tandelta | 0.742 | 0.711 | 0.608 | 0.900 |
| (100°C)/Tandelta (70°C) | | | | |
| IRHD hardness at 23°C | 69 | 68 | 69 | 72 |
| IRHD hardness at 100°C | 64 | 63 | 64 | 64 |
| DIN abrasion | 100 | 88 | 103 | 99 |
| (index) | | | | |

| | | | | |
|---|---|---|---|---|
| (*): comparative | | | | |

The results given in Table 3 and in Table 5 show that the crosslinked manufactured product comprising the ethylene/styrene copolymer according to the present invention (Examples 5 and 9) has improved hysteresis properties. In particular, although the Tandelta value of the composition comprising the ethylene/styrene copolymer decreases as the temperature increases, it decreases less than that of compositions comprising the comparative resins. The elastomeric compositions according to the invention thus make it possible to obtain a low rolling resistance and, consequently, limited energy consumption at the normal working temperatures of the tyre and better roadholding at high temperatures. In addition, these effects were obtained without undermining the abrasion resistance characteristics.

## Claims

1. Tyre for vehicle wheels, comprising at least one element made of crosslinked elastomeric material,
in which said element includes an elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

2. Tyre for vehicle wheels according to Claim 1, comprising:
- a carcass structure having at least one carcass ply shaped in a substantially toroidal configuration, the opposite side edges of which are associated with respective left and right bead wires, each bead wire being enclosed in a respective bead;
- a belt structure comprising at least one belt strip applied in a circumferentially external position relative to said carcass structure;
- a tread band superimposed circumferentially on said belt structure;
- a pair of side walls applied laterally on opposite sides relative to said carcass structure;
in which said element which includes an elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds;
is the tread band.

3. Tyre for vehicle wheels according to any one of the preceding claims, in which the copolymer of ethylene with at least one aromatic α-olefin (b) is present in the elastomeric composition in an amount of between 0.1 phr and 100 phr.

4. Tyre for vehicle wheels according to Claim 3, in which the copolymer of ethylene with at least one aromatic α-olefin (b) is present in the elastomeric composition in an amount of between 3 phr and 50 phr.

5. Tyre for vehicle wheels according to Claim 4, in which the copolymer of ethylene with at least one aromatic α-olefin (b) is present in the elastomeric composition in an amount of between 5 phr and 20 phr.

6. Tyre for vehicle wheels according to any one of the preceding claims, in which, in the copolymer (b), the aromatic α-olefin is an olefin of formula (I):
CH₂=CH-(R₁R₂C)ₓ-C₆H_{5-y}(R₃)_{y} (I)
in which R₁, R₂ and R₃, which may be identical to or different from each other, represent hydrogen or a linear or branched alkyl group containing from 1 to 8 carbon atoms; or R₃, different from R₁ and R₂, represents an alkoxy group, a carboxyl group, an acyloxy group, said acyloxy group optionally being substituted with alkyl groups containing from 1 to 8 carbon atoms or hydroxyl groups or halogen atoms; x is 0 or an integer between 1 and 5 inclusive; y is 0, 1 or 2.

7. Tyre for vehicle wheels according to Claim 6, in which the aromatic α-olefin is chosen from styrene; mono- or polyalkylstyrenes; styrene derivatives containing functional groups; phenyl-substituted alkenes; or mixtures thereof.

8. Tyre for vehicle wheels according to Claim 7, in which the aromatic α-olefin is styrene.

9. Tyre for vehicle wheels according to any one of the preceding claims, in which the copolymer of ethylene with at least one α-olefin (b) has a density of between 0.86 g/cm³ and 1.05 g/cm³.

10. Tyre for vehicle wheels according to any one of the preceding claims, in which the copolymer of ethylene with at least one α-olefin (b) has a Melt Flow Index (MFI) of between 0.1 g/10 min and 35 g/10 min.

11. Tyre for vehicle wheels according to any one of the preceding claims, in which the copolymer of ethylene with at least one α-olefin (b) has a glass transition temperature of at least -25°C and does not have a melting point.

12. Tyre for vehicle wheels according to any one of the preceding claims, in which the copolymer of ethylene with at least one α-olefin (b) has a glass transition temperature of at least -25°C and a melting point of at least 25°C.

13. Tyre for vehicle wheels according to any one of the preceding claims, in which the copolymer of ethylene with at least one α-olefin (b) has the following composition: 50 mol%-97 mol% of ethylene; 3 mol%-50 mol% of an aromatic α-olefin.

14. Tyre for vehicle wheels according to any one of the preceding claims, in which the copolymer of ethylene with at least one α-olefin (b) has a molecular weight distribution (MWD) index of less than 5.

15. Tyre for vehicle wheels according to any one of the preceding claims, in which the copolymer of ethylene with at least one α-olefin (b) contains functional groups chosen from: carboxylic groups, anhydride groups, ester groups, silane groups, epoxide groups.

16. Tyre for vehicle wheels according to Claim 15, in which the functional groups are present in an amount of between 0.05 and 50 parts by weight relative to 100 parts by weight of copolymer of ethylene with at least one α-olefin (b).

17. Tyre for vehicle wheels according to any one of the preceding claims, in which the elastomeric homopolymer or copolymer of 1,3-butadiene (a) has a glass transition temperature (Tg) of less than 20°C.

18. Tyre for vehicle wheels according to any one of the preceding claims, in which the 1,3-butadiene homopolymer or copolymer (a) has the following composition: 25%-100% by weight of 1,3-butadiene; 0%-75% by weight of a monovinylarene.

19. Tyre for vehicle wheels according to Claim 18, in which the monovinylarene is styrene.

20. Tyre for vehicle wheels according to Claim 18 or 19, in which the 1,3-butadiene homopolymer or copolymer (a) comprises from 0% to 60% by weight of a conjugated diolefin other than 1,3-butadiene and/or from 0% to 60% by weight of a polar comonomer.

21. Tyre for vehicle wheels according to any one of the preceding claims, in which the elastomeric homopolymer or copolymer of 1,3-butadiene (a) is chosen from: poly(1,3-butadiene), 1,3-butadiene/acrylonitrile copolymers, styrene/1,3-butadiene copolymers, styrene/isoprene/1,3-butadiene copolymers, styrene/2,3-butadiene/acrylonitrile copolymers, or mixtures thereof.

22. Tyre for vehicle wheels according to any one of the preceding claims, in which the elastomeric homopolymer or copolymer of 1,3-butadiene (a) is functionalized by reaction with suitable terminating agents or coupling agents.

23. Tyre for vehicle wheels according to any one of the preceding claims, in which the elastomeric composition comprises at least one elastomeric polymer (c) other than 1,3-butadiene homopolymers or copolymers.

24. Tyre for vehicle wheels according to Claim 23, in which the elastomeric polymer (c) other than 1,3-butadiene homopolymers or copolymers is an elastomeric homopolymer or copolymer with a glass transition temperature (Tg) of less than 20°C.

25. Tyre for vehicle wheels according to Claim 23, in which the elastomeric polymer (c) other than 1,3-butadiene homopolymers or copolymers is chosen from: cis-1,4-polyisoprene, 3,4-polyisoprene, styrene/isoprene copolymers, or mixtures thereof.

26. Tyre for vehicle wheels according to Claim 23, in which the elastomeric polymer (c) other than 1,3-butadiene homopolymers or copolymers is an elastomeric polymer of one or more monoolefins with an olefinic comonomer or a derivative thereof.

27. Tyre for vehicle wheels according to Claim 26, in which the elastomeric polymer (c) other than 1,3-butadiene homopolymers or copolymers is chosen from ethylene/propylene copolymers (EPR) or ethylene/propylene/diene copolymers (EPDM); polyisobutene; butyl rubbers; halobutyl rubbers, or mixtures thereof.

28. Tyre for vehicle wheels according to any one of Claims 23 to 27, in which the elastomeric polymer (c) other than 1,3-butadiene homopolymers or copolymers is an elastomeric polymer functionalized by reaction with suitable terminating agents or coupling agents.

29. Tyre for vehicle wheels according to any one of the preceding claims, in which at least one reinforcing filler is present in the elastomeric composition in an amount of between 0.1 phr and 120 phr.

30. Tyre for vehicle wheels according to Claim 29, in which the reinforcing filler is carbon black.

31. Tyre for vehicle wheels according to Claim 29, in which the reinforcing filler is silica.

32. Tyre for vehicle wheels according to Claim 31, in which the elastomeric composition comprises a silica-coupling agent.

33. Tread band for the tyres of vehicle wheels, including a crosslinkable elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

34. Tread band according to Claim 33, in which the copolymer of ethylene with at least one aromatic α-olefin (b) is defined according to any one of Claims 3 to 16.

35. Tread band according to Claim 33 or 34, in which the 1,3-butadiene homopolymer or copolymer (a) is defined according to any one of Claims 17 to 22.

36. Tread band according to Claims 33 to 35, in which the elastomeric composition comprises at least one elastomeric polymer (c) other than 1,3-butadiene homopolymers or copolymers.

37. Tread band according to Claim 36, in which the elastomeric polymer (c) other than 1,3-butadiene homopolymers or copolymers is defined according to any one of Claims 23 to 28.

38. Tread band according to any one of Claims 33 to 37, in which at least one reinforcing filler is present in the elastomeric composition in an amount of between 0.1 phr and 120 phr.

39. Tread band according to Claim 38, in which the reinforcing filler is carbon black.

40. Tread band according to Claim 38, in which the reinforcing filler is silica.

41. Tread band according to Claim 40, in which the elastomeric composition comprises a silica-coupling agent.

42. Elastomeric composition comprising:
(a) at least one elastomeric homopolymer or copolymer of 1,3-butadiene;
(b) at least one copolymer of ethylene with at least one aromatic α-olefin, said copolymer being essentially free of side chains containing ethylenic double bonds.

43. Elastomeric composition according to Claim 42, in which the copolymer of ethylene with at least one aromatic α-olefin (b) is defined according to any one of Claims 3 to 16.

44. Elastomeric composition according to Claim 42 or 43, in which the 1,3-butadiene homopolymer or copolymer (a) is defined according to any one of Claims 17 to 22.

45. Elastomeric composition according to any one of Claims 42 to 44, in which the elastomeric composition comprises at least one elastomeric polymer (c) other than 1,3-butadiene homopolymers or copolymers.

46. Elastomeric composition according to Claim 45, in which the elastomeric polymer (c) other than 1,3-butadiene homopolymers or copolymers is defined according to any one of Claims 23 to 28.

47. Elastomeric composition according to any one of Claims 42 to 46, in which at least one reinforcing filler is present in the elastomeric composition in an amount of between 0.1 phr and 120 phr.

48. Elastomeric composition according to Claim 47, in which the reinforcing filler is carbon black.

49. Elastomeric composition according to Claim 47, in which the reinforcing filler is silica.

50. Elastomeric composition according to Claim 49, in which the elastomeric composition comprises a silica-coupling agent.

51. Crosslinked elastomeric manufactured product obtained by vulcanizing an elastomeric composition defined according to any one of Claims 42 to 50.

## Patentansprüche

1. Reifen für Kraftfahrzeugräder, der wenigstens ein aus einem vernetzten Elastomermaterial hergestelltes Element umfasst, das seinerseits ein Elastomergemisch umfasst, das
a) wenigstens ein elastomeres 1,3-Butadien-Homopolymer oder
- Copolymer und
b) wenigstens ein Ethylen-Copolymer mit wenigstens einem aromatischen α-Olefin enthält, wobei das Copolymer im Wesentlichen keine Seitenketten mit ethylenischen Doppelbindungen umfasst.

2. Reifen für Kraftfahrzeugräder nach Anspruch 1, der
- einen Karkassenaufbau mit wenigstens einer Karkassenschicht mit im Wesentlichen ringförmiger Konfiguration, deren gegenüberliegende Seitenkanten mit den entsprechenden rechten und linken Wulstdrähten verbunden sind, von denen jeder in den entsprechenden Wulst eingebettet ist,
- einen Gürtelaufbau, der wenigstens einen Gürtelstreifen umfasst, der außen am Umfang des Karkassenaufbaus aufgebracht ist,
- ein auf den Umfang des Gürtelaufbaus aufgebrachtes Laufflächenband und
- ein Paar von Seitenwänden umfasst, die seitlich auf den gegenüberliegenden Seiten, bezogen auf den Karkassenaufbau, aufgebracht sind,
wobei das Element, das ein Elastomergemisch umfasst, das
a) wenigstens ein elastomeres 1.3-Butadien-Homopolymer oder -Copolymer und
b) wenigstens ein Ethylen-Copolymer mit wenigstens einem aromatischen α-Olefin enthält, wobei das Copolymer im Wesentlichen keine Seitenketten mit ethylenischen Doppelbindungen umfasst, das Laufflächenband ist.

3. Reifen für Kraftfahrzeugräder nach einem der vorhergehenden Ansprüche, bei dem das Ethylen-Copolymer mit wenigstens einem aromatischen α-Olefin (b) im Elastomergemisch in einer Menge von 0,1 bis 100 Teilen pro 100 Teile Kautschuk vorliegt.

4. Reifen für Kraftfahrzeugräder nach Anspruch 3, bei dem das Ethylen-Copolymer mit wenigstens einem aromatischen α-Olefin (b) im Elastomergemisch in einer Menge von 3 bis 50 Teilen pro 100 Teile Kautschuk vorliegt.

5. Reifen für Kraftfahrzeugräder nach Anspruch 4, bei dem das Ethylen-Copolymer mit wenigstens einem aromatischen α-Olefin (b) im Elastomergemisch in einer Menge von 5 bis 20 Teilen pro 100 Teile Kautschuk vorliegt.

6. Reifen für Kraftfahrzeugräder nach einem der vorhergehenden Ansprüche, bei dem im Copolymer (b) das aromatische α-Olefin ein Olefin der Formel I
CH₂=CH- (R₁R₂C)ₓ-C₆H_{5-y}(R₃)_{y} (I)
ist, worin R₁, R₂ und R₃, die gleich oder unterschiedlich sein können, Wasserstoff oder eine unverzweigte oder verzweigte Alkylgruppe mit 1 bis 8 C-Atomen darstellen, oder R₃ im Unterschied zu R₁ und R₂ eine Alkoxy-, Carboxy- oder Acyloxygruppe darstellt, wobei die Acyloxygruppe gegebenenfalls durch Alkylgruppen mit 1 bis 8 C-Atomen oder Hydroxylgruppen oder Halogenatome substituiert sein kann, x 0 oder eine ganze Zahl von 1 bis einschließlich 5 und y 0, 1 oder 2 bedeuten.

7. Reifen für Kraftfahrzeugräder nach Anspruch 6, bei dem das aromatische α-Olefin (b) ausgewählt wird unter Styrol, Mono- oder Polyalkylstyrolen, funktionelle Gruppen enthaltenden Styrolderivaten, phenylsubstituerten Alkenen oder Gemischen davon.

8. Reifen für Kraftfahrzeugräder nach Anspruch 7, bei dem das aromatische α-Olefin Styrol ist.

9. Reifen für Kraftfahrzeugräder nach einem der vorhergehenden Ansprüche, bei dem das Ethylen-Copolymer mit wenigstens einem α-Olefin (b) eine Dichte von 0,86 g/cm³ bis 1,05 g/cm³ hat.

10. Reifen für Kraftfahrzeugräder nach einem der vorhergehenden Ansprüche, bei dem das Ethylen-Copolymer mit wenigstens einem α-Olefin (b) einen Schmelzindex (SI) von 0,1 g/10 min bis 35 g/10 min hat.

11. Reifen für Kraftfahrzeugräder nach einem der vorhergehenden Ansprüche, bei dem das Ethylen-Copolymer mit wenigstens einem α-Olefin (b) eine Glasumwandlungstemperatur von wenigstens -25°C aufweist und keinen Schmelzpunkt hat.

12. Reifen für Kraftfahrzeugräder nach einem der vorhergehenden Ansprüche, bei dem das Ethylen-Copolymer mit wenigstens einem α-Olefin (b) eine Glasumwandlungstemperatur von wenigstens -25°C und einen Schmelzpunkt von wenigstens 25°C aufweist.

13. Reifen für Kraftfahrzeugräder nach einem der vorhergehenden Ansprüche, bei dem das Ethylen-Copolymer mit wenigstens einem α-Olefin (b) die folgende Zusammensetzung hat: 50 mol-% - 97 mol-% Ethylen und 3 mol-% - 50 mol-% eines aromatischen α-Olefins.

14. Reifen für Kraftfahrzuegräder nach einem der vorhergehenden Ansprüche, bei dem das Ethylen-Copolymer mit wenigstens einem α-Olefin (b) einen Molekulargewichtsverteilungsindex (MGVI) von unter 5 aufweist.

15. Reifen für Kraftfahrzeugräder nach einem der vorhergehenden Ansprüche, bei dem Ethylen-Copolymer mit wenigstens einem α-Olefin (b) funktionelle Gruppen enthält, ausgewählt unter Carboxyl-, Anhydrid-, Ester-, Silan- und Epoxidgruppen.

16. Reifen für Kraftfahrzeugräder nach Anspruch 15, bei dem die funktionellen Gruppen in einer Menge von 0,05 bis 50 Gew.-Teilen, bezogen auf 100 Gew.-Teile Ethylen-Copolymer mit wenigstens einem α-Olefin (b), vorliegen.

17. Reifen für Kraftfahrzeugräder nach einem der vorhergehenden Ansprüche, bei dem das elastomere 1,3-Butadien-Homopolymer oder -Copolymer (a) eine Glasumwandlungstemperatur (T_{g}) von unter 20°C aufweist.

18. Reifen für Kraftfahrzeugräder nach einem der vorhergehenden Ansprüche, bei dem das 1,3-Butadien-Homopolymer oder -Copolymer (a) die folgende Zusammensetzung hat: 25 - 100 Gew.-% 1,3-Butadien und 0 bis 75 Gew.-% eines Monovinylarens.

19. Reifen für Kraftfahrzeugräder nach Anspruch 18, bei dem das Monovinylaren Styrol ist.

20. Reifen für Kraftfahrzeugräder nach Anspruch 18 oder 19, bei dem das 1,3-Butadien-Homopolymer oder -Copolymer (a) 0 bis 60 Gew.-% eines von 1,3-Butadien unterschiedlichen konjugierten Diolefins und/oder 0 bis 60 Gew.-% eines polaren Comonomers umfasst.

21. Reifen für Kraftfahrzeugräder nach einem der vorhergehenden Ansprüche, bei dem das elastomere 1,3-Butadien-Homopolymer oder -Copolymer (a) ausgewählt wird unter Poly(1,3-butadien), 1,3-Butadien-Acrylnitril-, Styrol-1,3-Butadien-, Styrol-Isopren-1,3-Butadien-, Styrol-1,3-Butadien-Acrylnitril-Copolymeren oder Gemischen davon.

22. Reifen für Kraftfahrzeugräder nach einem der vorhergehenden Ansprüche, bei dem das elastomere 1,3-Butadien-Homopolymer oder -Copolymer (a) durch Umsetzung mit geeigneten Abbruch- oder Kupplungsmitteln funktionalisiert ist.

23. Reifen für Kraftfahrzeugräder nach einem der vorhergehenden Ansprüche, bei dem das elastomere Gemisch wenigstens ein von 1,3-Butadien-Homopolymeren oder -Copolymeren unterschiedliches elastomeres Polymer (c) umfasst.

24. Reifen für Kraftfahrzeugräder nach Anspruch 23, bei dem das von 1,3-Butadien-Homopolymeren oder -Copolymeren unterschiedliche elastomere Polymer (c) ein elastomeres Homopolymer oder Copolymer mit einer Glasumwandlungstemperatur (T_{g}) von unter 20°C ist.

25. Reifen für Kraftfahrzeugräder nach Anspruch 23, bei dem das von 1,3-Butadien-Homopolymeren oder -Copolymeren unterschiedliche elastomere Polymer (c) ausgewählt wird unter cis-1,4-Polyisopren, 3,4-Polyisopren, Styrol-Isopren-Copolymeren oder Gemischen davon.

26. Reifen für Kraftfahrzeugräder nach Anspruch 23, bei dem das von 1,3-Butadien-Homopolymeren oder -Copolymeren unterschiedliche elastomere Polymer (c) ein elastomeres Polymer aus einem oder mehreren Monoolefinen mit einem olefinischen Comonomer oder einem Derivat davon ist.

27. Reifen für Kraftfahrzeugräder nach Anspruch 26, bei dem das von 1,3-Butadien-Homopolymeren oder -Copolymeren unterschiedliche elastomere Polymer (c) ausgewählt wird unter Ethylen-Propylen-Copolymeren (EPR) oder Ethylen-Propylen-Dien-Copolymeren (EPDM), Polyisobuten, Butylkautschuken, Halobutylkautschuken oder Gemischen davon.

28. Reifen für Kraftfahrzeugräder nach einem der Ansprüche 23 bis 27, bei dem das von 1,3-Butadien-Homopolymeren oder - Copolymeren unterschiedliche elastomere Polymer (c) ein durch Umsetzung mit geeigneten Abbruch- oder Kupplungsmitteln funktionalisiertes elastomeres Polymer ist.

29. Reifen für Kraftfahrzeugräder nach einem der vorhergehenden Ansprüche, bei dem wenigstens ein Verstärkungsfüller in einer Menge von 0,1 bis 120 Teilen pro 100 Teile Kautschuk im Elastomergemisch vorliegt.

30. Reifen für Kraftfahrzeugräder nach Anspruch 29, bei dem der Verstärkungsfüller Ruß ist.

31. Reifen für Kraftfahrzeugräder nach Anspruch 29, bei dem der Verstärkungsfüller Kieselerde ist.

32. Reifen für Kraftfahrzeugräder nach Anspruch 31, bei dem das Elastomergemisch ein Kieselerdekupplungsmittel umfasst.

33. Reifenlaufflächenband für Kraftfahrzeugräder, das ein vernetzbares Elastomergemisch umfasst, das
a) wenigstens ein elastomeres 1,3-Butadien-Homopolymer oder - Copolymer und
b) wenigstens ein Ethylen-Copolymer mit wenigstens einem aromatischen α-Olefin enthält, wobei das Copolymer im Wesentlichen keine Seitenketten mit ethylenischen Doppelbindungen umfasst.

34. Laufflächenband nach Anspruch 33, bei dem das Ethylen-Copolymer mit wenigstens einem aromatischen α-Olefin (b) nach einem der Ansprüche 3 bis 16 definiert ist.

35. Laufflächenband nach Anspruch 33 oder 34, bei dem das 1,3-Butadien-Homopolymer oder -Copolymer (a) nach einem der Ansprüche 17 bis 22 definiert ist.

36. Laufflächenband nach einem der Ansprüche 33 bis 35, bei dem das Elastomergemisch wenigstens ein von 1,3-Butadien-Homopolymeren oder -Copolymeren unterschiedliches elastomeres Polymer (c) umfasst.

37. Laufflächenband nach Anspruch 36, bei dem das von 1,3-Butadien-Homopolymeren oder -Copolymeren unterschiedliche elastomere Polymer (c) nach einem der Ansprüche 23 bis 28 definiert ist.

38. Laufflächenband nach einem der Ansprüche 33 bis 37, bei dem im elastomeren Gemisch wenigstens ein Verstärkungsfüller in einer Menge von 0,1 bis 120 Teilen pro 100 Teile Kautschuk vorliegt.

39. Laufflächenband nach Anspruch 38, bei dem der Verstärkungsfüller Ruß ist.

40. Laufflächenband nach Anspruch 38, bei dem Verstärkungsfüller Kieselerde ist.

41. Laufflächenband nach Anspruch 40, bei dem das Elastomergemisch ein Kieselerdekupplungsmittel umfasst.

42. Elastomeres Gemisch, das
a) wenigstens ein elastomeres 1,3-Butadien-Homopolymer oder - Copolymer und
b) wenigstens ein Ethylencopolymer mit wenigstens einem aromatischen α-Olefin enthält, wobei das Copolymer im Wesentlichen keine Seitenketten mit ethylenischen Doppelbindungen umfasst.

43. Elastomeres Gemisch nach Anspruch 42, bei dem das Ethylen-Copolymer mit wenigstens einem aromatischen α-Olefin (b) nach einem der Ansprüche 3 bis 16 definiert ist.

44. Elastomeres Gemisch nach Anspruch 42, bei dem das 1,3-Butadien-Homopolymer oder -Copolymer (a) nach einem der Ansprüche 17 bis 22 definiert ist.

45. Elastomeres Gemisch nach einem der Ansprüche 42 bis 44, bei dem das Elastomergemisch wenigstens ein von 1,3-Butadien-Homopolymeren oder -Copolymeren unterschiedliches elastomeres Polymer (c) umfasst.

46. Elastomeres Gemisch nach Anspruch 45, bei dem das von 1,3-Butadien-Homopolymeren oder -Copolymeren unterschiedliche elastomere Polymer (c) nach einem der Ansprüche 23 bis 28 definiert ist.

47. Elastomeres Gemisch nach einem der Ansprüche 42 bis 46, bei dem im elastomeren Gemisch wenigstens ein Verstärkungsfüller in einer Menge von 0,1 bis 120 Teilen pro 100 Teile Kautschuk vorliegt.

48. Elastomeres Gemisch nach Anspruch 47, bei dem der Verstärkungsfüller Ruß ist.

49. Elastomeres Gemisch nach Anspruch 47, bei dem Verstärkungsfüller Kieselerde ist.

50. Elastomeres Gemisch nach Anspruch 49, bei dem das Elastomergemisch ein Kieselerdekupplungsmittel umfasst.

51. Vernetztes Elastomerprodukt, hergestellt durch Vulkanisation eines Elastomergemisches gemäß einem der Ansprüche 42 bis 50.

## Revendications

1. Pneu pour roue de véhicule, comprenant au moins un élément en matière élastomère réticulée, ledit élément comprenant une composition élastomère renfermant :
(a) au moins un homopolymère ou copolymère élastomère de butadiène-1,3,
(b) au moins un copolymère d'éthylène et d'au moins une α-oléfine aromatique, ce copolymère étant essentiellement exempt de chaînes latérales contenant des doubles liaisons éthyléniques.

2. Pneu pour roue de véhicule selon la revendication 1, comprenant :
une carcasse ayant au moins un pli de carcasse de configuration pratiquement toroïdale, dont les bords latéraux opposés sont associés à des tringles de talon correspondantes à droite et à gauche, chaque tringle de talon étant enfermée dans un talon correspondant,
une courroie comprenant au moins une bande de courroie, appliquée sur la circonférence externe de ladite carcasse,
une bande de roulement superposée à ladite courroie suivant la circonférence,
une paire de flancs appliqués latéralement sur les côtés opposés de ladite carcasse,
pneu pour lequel ledit élément comprenant une composition élastomère renfermant :
(a) au moins un homopolymère ou copolymère élastomère de butadiène-1,3,
(b) au moins un copolymère d'éthylène et d'au moins une α-oléfine aromatique, ce copolymère étant essentiellement exempt de chaînes latérales contenant des doubles liaisons éthyléniques,
est la bande de roulement.

3. Pneu pour roue de véhicule selon l'une quelconque des revendications précédentes, pour lequel le copolymère (b) d'éthylène et d'au moins une α-oléfine aromatique est présent dans la composition élastomère en une proportion comprise entre 0, 1 partie pour cent (ppc) et 100 ppc.

4. Pneu pour roue de véhicule selon la revendication 3, pour lequel le copolymère (b) d'éthylène et d'au moins une α-oléfine aromatique est présent dans la composition élastomère en une proportion comprise entre 3 ppc et 50 ppc.

5. Pneu pour roue de véhicule selon la revendication 4, pour lequel le copolymère (b) d'éthylène et d'au moins une α-oléfine aromatique est présent dans la composition élastomère en une proportion comprise entre 5 ppc et 20 ppc.

6. Pneu pour roue de véhicule selon l'une quelconque des revendications précédentes, pour lequel l'α-oléfine aromatique du copolymère (b) est une oléfine de formule (I) :
CH₂=CH-(R₁R₂C)ₓ-C₆H_{5-y}(R₃)_{y} (I)
dans laquelle R₁, R₂ et R₃, qui peuvent être identiques ou différents, représentent chacun un atome d'hydrogène ou un groupe alkyle linéaire ou ramifié, ayant 1 à 8 atomes de carbone, ou bien R₃, à la différence de R₁ et R₂, représente un groupe alcoxy, un groupe carboxyle, un groupe acyloxy éventuellement substitué par des groupes alkyle ayant 1 à 8 atomes de carbone, ou des groupes hydroxyle ou des atomes d'halogène, x représente 0 ou un nombre entier de 1 à 5, bornes incluses, et y est égal à 0, 1 ou 2.

7. Pneu pour roue de véhicule selon la revendication 6, pour lequel l'α-oléfine aromatique est choisie parmi le styrène, les mono- ou polyalkylstyrènes, les dérivés du styrène contenant des groupes fonctionnels, les alcènes substitués par un groupe phényle, et leurs mélanges.

8. Pneu pour roue de véhicule selon la revendication 7, pour lequel l'α-oléfine aromatique est le styrène.

9. Pneu pour roue de véhicule selon l'une quelconque des revendications précédentes, pour lequel le copolymère (b) d'éthylène et d'au moins une α-oléfine aromatique est un copolymère ayant une masse volumique comprise entre 0, 86 g/cm³ et 1, 05 g/cm³.

10. Pneu pour roue de véhicule selon l'une quelconque des revendications précédentes, pour lequel le copolymère (b) d'éthylène et d'au moins une α-oléfine aromatique est un copolymère ayant un indice de fluidité à l'état fondu (IFF) compris entre 0, 1 g/10 min. et 35 g/10 min.

11. Pneu pour roue de véhicule selon l'une quelconque des revendications précédentes, pour lequel le copolymère (b) d'éthylène et d'au moins une α-oléfine aromatique est un copolymère ayant une température de transition vitreuse d'au moins -25 °C et n'ayant pas de point de fusion.

12. Pneu pour roue de véhicule selon l'une quelconque des revendications précédentes, pour lequel le copolymère (b) d'éthylène et d'au moins une α-oléfine aromatique est un copolymère ayant une température de transition vitreuse d'au moins -25 °C et un point de fusion d'au moins 25 °C.

13. Pneu pour roue de véhicule selon l'une quelconque des revendications précédentes, pour lequel le copolymère (b) d'éthylène et d'au moins une α-oléfine aromatique est un copolymère ayant la composition suivante : 50 % en moles à 97 % en moles d'éthylène, 3 % en moles à 50 % en moles d'une α-oléfine aromatique.

14. Pneu pour roue de véhicule selon l'une quelconque des revendications précédentes, pour lequel le copolymère (b) d'éthylène et d'au moins une α-oléfine aromatique est un copolymère ayant un indice de distribution des masses moléculaires (DMM) inférieur à 5.

15. Pneu pour roue de véhicule selon l'une quelconque des revendications précédentes, pour lequel le copolymère (b) d'éthylène et d'au moins une α-oléfine est un copolymère contenant des groupes fonctionnels choisis parmi des groupes carboxyliques, des groupes anhydride, des groupes ester, des groupes silyle, et des groupes époxyde.

16. Pneu pour roue de véhicule selon la revendication 15, pour lequel les groupes fonctionnels sont présents en une proportion comprise entre 0, 05 et 50 parties en poids pour 100 parties en poids de copolymère (b) d'éthylène et d'au moins une α-oléfine.

17. Pneu pour roue de véhicule selon l'une quelconque des revendications précédentes, pour lequel l'homopolymère ou copolymère élastomère (a) de butadiène-1,3 est un polymère ayant une température de transition vitreuse (T*ᵥ) inférieure à 20 °C.

18. Pneu pour roue de véhicule selon l'une quelconque des revendications précédentes, pour lequel l'homopolymère ou copolymère (a) de butadiène-1,3 est un polymère ayant la composition suivante : 25 % à 100 % en poids de butadiène-1,3, 0 % à 75 % en poids d'un monovinylarène.

19. Pneu pour roue de véhicule selon la revendication 18, pour lequel le monovinylarène est le styrène.

20. Pneu pour roue de véhicule selon la revendication 18 ou 19, pour lequel l'homopolymère ou copolymère (a) de butadiène-1,3 est un polymère comprenant 0 % à 60 % en poids d'une dioléfine conjuguée autre que le butadiène-1,3, et/ou 0 % à 60 % en poids d'un comonomère polaire.

21. Pneu pour roue de véhicule selon l'une quelconque des revendications précédentes, pour lequel l'homopolymère ou copolymère élastomère (a) de butadiène-1,3 est choisi parmi : le poly(butadiène-1,3), les copolymères de butadiène-1,3 et d'acrylonitrile, les copolymères de butadiène-1,3 et de styrène, les copolymères de butadiène-1,3, d'isoprène et de styrène, les copolymères d'acrylonitrile, de butadiène-1,3 et de styrène, et leurs mélanges.

22. Pneu pour roue de véhicule selon l'une quelconque des revendications précédentes, pour lequel l'homopolymère ou copolymère élastomère (a) de butadiène-1,3 est fonctionnalisé par réaction avec des agents de terminaison ou des agents de couplage appropriés.

23. Pneu pour roue de véhicule selon l'une quelconque des revendications précédentes, pour lequel la composition élastomère comprend au moins un polymère élastomère (c) autre que des homopolymères ou copolymères de butadiène-1,3.

24. Pneu pour roue de véhicule selon la revendication 23, pour lequel le polymère élastomère (c) autre que les homopolymères ou copolymères de butadiène-1,3 est un homopolymère ou copolymère élastomère ayant une température de transition vitreuse (Tᵥ) inférieure à 20 °C.

25. Pneu pour roue de véhicule selon la revendication 23, pour lequel le polymère élastomère (c) autre que les homopolymères ou copolymères de butadiène-1,3, est choisi parmi le polyisoprène 1-4 cis, le polyisoprène 3-4, les copolymères d'isoprène et de styrène, et leurs mélanges.

26. Pneu pour roue de véhicule selon la revendication 23, pour lequel le polymère élastomère (c) autre que les homopolymères ou copolymères de butadiène-1,3, est un polymère élastomère d'une ou plusieurs monooléfines et d'un comonomère oléfinique ou d'un dérivé d'un tel comonomère.

27. Pneu pour roue de véhicule selon la revendication 26, pour lequel le polymère élastomère (c) autre que les homopolymères ou copolymères de butadiène-1,3, est choisi parmi des copolymères d'éthylène et de propylène (EPR) ou des copolymères d'éthylène, de propylène et de diène (EPDM), le polyisobutène, les butylcaoutchoucs, les halogénobutylcaoutchoucs, et leurs mélanges.

28. Pneu pour roue de véhicule selon l'une quelconque des revendications 23 à 27, pour lequel le polymère élastomère (c) autre que les homopolymères ou copolymères de butadiène-1,3, est un polymère élastomère fonctionnalisé par réaction avec des agents de terminaison ou des agents de couplage appropriés.

29. Pneu pour roue de véhicule selon l'une quelconque des revendications précédentes, pour lequel au moins une charge de renforcement est présente dans la composition élastomère, en une proportion comprise entre 0, 1 ppc et 120 ppc.

30. Pneu pour roue de véhicule selon la revendication 29, pour lequel la charge de renforcement est du noir de carbone.

31. Pneu pour roue de véhicule selon la revendication 29, pour lequel la charge de renforcement est de la silice.

32. Pneu pour roue de véhicule selon la revendication 31, pour lequel la composition élastomère comprend un agent de couplage de la silice.

33. Bande de roulement pour les pneus de roue de véhicule, qui comprend une composition élastomère réticulable renfermant :
(a) au moins un homopolymère ou copolymère élastomère de butadiène-1,3,
(b) au moins un copolymère d'éthylène et d'au moins une α-oléfine aromatique, ce copolymère étant essentiellement exempt de chaînes latérales contenant des doubles liaisons éthyléniques.

34. Bande de roulement selon la revendication 33, pour laquelle le copolymère (b) d'éthylène et d'au moins une α-oléfine aromatique est un copolymère tel que défini dans l'une quelconque des revendications 3 à 16.

35. Bande de roulement selon la revendication 33 ou 34, pour laquelle l'homopolymère ou copolymère (a) de butadiène-1,3 est un polymère tel que défini dans l'une quelconque des revendications 17 à 22.

36. Bande de roulement selon l'une quelconque des revendications 33 à 35, dont la composition élastomère renferme au moins un polymère élastomère (c) autre que les homopolymères ou copolymères de butadiène-1,3.

37. Bande de roulement selon la revendication 36, pour laquelle le polymère élastomère (c) autre que les homopolymères ou copolymères de butadiène-1,3, est un polymère tel que défini dans l'une quelconque des revendications 23 à 28.

38. Bande de roulement selon l'une quelconque des revendications 33 à 37, pour laquelle au moins une charge de renforcement est présente dans la composition élastomère, en une proportion comprise entre 0, 1 ppc et 120 ppc.

39. Bande de roulement selon la revendication 38, pour laquelle la charge de renforcement est du noir de carbone.

40. Bande de roulement selon la revendication 38, pour laq.uelle la charge de renforcement est de la silice.

41. Bande de roulement selon la revendication 40, dont la composition élastomère comprend un agent de couplage de la silice.

42. Composition élastomère qui comprend :
(a) au moins un homopolymère ou copolymère élastomère de butadiène-1,3,
(b) au moins un copolymère d'éthylène et d'au moins une α-oléfine aromatique, ce copolymère étant essentiellement exempt de chaînes latérales contenant des doubles liaisons éthyléniques.

43. Composition élastomère selon la revendication 42, dont le copolymère (b) d'éthylène et d'au moins une α-oléfine aromatique est un copolymère tel que défini dans l'une quelconque des revendications 3 à 16.

44. Composition élastomère selon la revendication 42 ou 43, dont l'homopolymère ou copolymère (a) de butadiène-1,3 est un polymère tel que défini dans l'une quelconque des revendications 17 à 22.

45. Composition élastomère selon l'une quelconque des revendications 42 à 44, qui comprend au moins un polymère élastomère (c) autre que les homopolymères ou copolymères de butadiène-1,3.

46. Composition élastomère selon la revendication 45, dont le polymère élastomère (c) autre que les homopolymères ou copolymères de butadiène-1,3 est un polymère tel que défini dans l'une quelconque des revendications 23 à 28.

47. Composition élastomère selon l'une quelconque des revendications 42 à 46, dans laquelle au moins une charge de renforcement est présente en une proportion comprise entre 0, 1 ppc et 120 ppc.

48. Composition élastomère selon la revendication 47, dont la charge de renforcement est du noir de carbone.

49. Composition élastomère selon la revendication 47, dont la charge de renforcement est de la silice.

50. Composition élastomère selon la revendication 49, qui renferme un agent de couplage de la silice.

51. Produit manufacturé élastomère réticulé, qui est obtenu par vulcanisation d'une composition élastomère telle que définie dans l'une quelconque des revendications 42 à 50.
